# EUROPÄISCHE PATENTSCHRIFT

(11) **EP 4 652 639 B1**
(45) Veröffentlichungstag und Bekanntmachung des Hinweises auf die Patenterteilung: **22.07.2026**
(21) Anmeldenummer: 23711931.8
(22) Anmeldetag: 10.02.2023
(51) Int. Cl.: H01M 8/04007, H01M 8/04014, H01M 8/04089, H01M 8/06, H01M 8/12, H01M 8/04029, H01M 8/0432

(54) **BRENNSTOFFZELLENSYSTEM**
FUEL CELL SYSTEM
SYSTÈME À PILES À COMBUSTIBLE

(43) Veröffentlichungstag der Anmeldung: 26.11.2025
(73) Patentinhaber: AVL List GmbH, 8020 Steiermark Graz (AT)
(72) Erfinder: NEUBAUER, Raphael, 8042 Graz (AT); SCHLUCKNER, Christoph, 8042 Graz (AT); KEREKES, Krisztina, 6000 Kecskemét (HU)
(86) Internationale Anmeldenummer: PCT/AT2023/060040
(87) Internationale Veröffentlichungsnummer: WO 2024/164034

(56) Entgegenhaltungen:
- EP-B1- 2 058 885
- US-A1- 2016 141 692

## Beschreibung

Die Erfindung betrifft ein Brennstoffzellensystem, insbesondere SOFC-System, umfassend zumindest einen Brennstoffzellenstapel mit einem Anodenabschnitt und einem Kathodenabschnitt, einen Luftzuführabschnitt, einen Brennstoffzuführabschnitt, einen Abgasabschnitt mit einem Nachbrenner und einen Rezirkulationsabschnitt zur Rezirkulation von Anodenabgas als Rezirkulationsgas aus dem Anodenabschnitt.

Weiter betrifft die Erfindung eine Verwendung eines solchen Brennstoffzellensystems.

SOFC-Systeme sind aus dem Stand der Technik bekannt wie beispielsweise aus der der US 2016/141692 A1 und der EP 2 058 885 B1. Um Wärme in einem solchen Brennstoffzellensystem richtig zu verteilen und auch zu halten, ist es aus dem Stand der Technik bekannt, ein Wärmetauschernetzwerk einzusetzen. Darüber hinaus wird ungenützter oder nicht verbrauchter Brennstoff im System typischerweise in einem Oxidationskatalysator oder Nachbrenner umgesetzt, um auch diese Wärme im Brennstoffzellensystem selbst zu nützen. Aus dem Stand der Technik ist es hierfür bekannt, Oxidationsmittel aus einem Brennstoffzellenstapel mit dem ungenützten Brennstoff zu vermischen und als solches Gemisch dem Oxidationskatalysator zuzuführen. Dieses heiße Abgas wird dann über das Wärmetauschernetzwerk geleitet, wodurch Wärme im System verteilbar ist.

Dies führt allerdings bei Brennstoffzellenstapel, welche bei hohen Temperaturen arbeiten, zu Problemen. Bei derartigen Brennstoffzellenstapel kann eine Temperatur an dessen Auslass 650 °C oder mehr sein. Dabei ergeben sich dann in weiterer Folge sehr hohe Auslasstemperaturen am Oxidationskatalysator und noch viel höhere Temperaturspitzen im Oxidationskatalysator. Dies kann zu deutlich erhöhten thermischen Degradation des Oxidationskatalysators führen. Darüber hinaus kann sich der ungenutzte Brennstoff bereits bei der Mischung mit dem heißen Oxidationsmittel vom Brennstoffzellenstapel entzünden und hier Schäden an z. B. an Rohrleitungen und auch am stromabwärts gelegenen Oxidationskatalysator hervorrufen. Des Weiteren wird typischerweise nur ein einzelner Wärmetauscher eingesetzt, um das Oxidationsmittel von Umgebungsbedingungen auf die gewünschte Einlasstemperatur zu heben. Dies verursacht hohe thermische Belastungen an diesem einen Wärmetauscher und hat auch oft zur Folge, dass sehr hohe Wirkungsgradanforderungen an diesen einen Wärmetauscher gestellt werden müssen. Hier setzt die Erfindung an. Aufgabe der Erfindung ist es, ein Brennstoffzellensystem bereitzustellen, welches besonders effizient insbesondere auch bei sehr hohen Brennstoffzellenstapeltemperaturen betreibbar ist.

Weiter ist es ein Ziel, ein eine Verwendung eines solchen Brennstoffzellensystems anzugeben.

Die Aufgabe wird erfindungsgemäß dadurch gelöst, dass bei einem Brennstoffzellensystem der eingangs genannten Art im Rezirkulationsabschnitt ein erster Wärmetauscher angeordnet ist, wobei stromabwärts des ersten Wärmetauschers zur Aufteilung des Anodenabgases in den Rezirkulationsabschnitt und in den Abgasabschnitt eine erste Teilvorrichtung vorgesehen ist, um einen Teil des Anodenabgases zum ersten Wärmetauscher und einen anderen Teil des Anodenabgases zum Nachbrenner zu leiten, wobei eine warme Seite des ersten Wärmetauschers im Rezirkulationsabschnitt und eine kalte Seite des ersten Wärmetauschers im Brennstoffzuführabschnitt angeordnet ist.

Ein dadurch erzielter Vorteil ist insbesondere darin zu sehen, dass durch die Aufteilung des Anodenabgases nicht das ganze, insbesondere sehr heiße Abgas, sondern nur ein Teil desselben direkt zum Nachbrenner geleitet wird, wodurch eine Temperatur im Nachbrenner gesenkt werden kann. Dadurch ist die Temperatur auch stromaufwärts des Nachbrenners unter eine Zündtemperatur senkbar, wodurch unerwünschte Zündungen in Leitungen vermieden werden.

Das Anodenabgas ist gleichzeitig im ersten Wärmetauscher abkühlbar, wonach dieses in einen Abschnitt der zum Nachbrenner geht und in den Rezirkulationsabschnitt aufgeteilt wird.

Das Brennstoffzellensystem ist insbesondere als Hochtemperatur-Brennstoffzellensystem und bevorzugt als SOFC-System ausgebildet.

Der Rezirkulationsabschnitt dient der Rezirkulation von Anodenabgas als Rezirkulationsgas aus dem Anodenabschnitt des Brennstoffzellenstapels des Brennstoffzellensystems. Hierfür ist der Rezirkulationsabschnitt insbesondere mit einer Rezirkulationsleitung ausgestattet, welche insbesondere fluidkommunizierend mit dem Anodenabschnitt verbunden ist. Der Rezirkulationsabschnitt ist im Brennstoffzellensystem eingebunden.

Beim Brennstoffzellensystem gemäß der Erfindung ist ein Luftzuführabschnitt vorgesehen, über welchen Luft von einer Luftquelle in Richtung des Kathodenabschnittes förderbar ist. Unter Luft ist im Rahmen der Erfindung ein sauerstoffhaltiges Gas zu verstehen. Weiter weist das Brennstoffzellensystem einen Brennstoffzuführabschnitt, über welchen Brennstoff von einer Brennstoffquelle in Richtung des Anodenabschnittes förderbar ist. Als Brennstoff kann beispielsweise ein kohlenstoffhaltiges Gas wie Methan oder Ethan, Erdgas oder auch Wasserstoff eingesetzt werden. Grundsätzlich kann auch ein flüssiger Brennstoff verwendet werden. Selbstverständlich sind im Brennstoffzellensystem vorzugsweise weitere Bauteile vorgesehen, beispielsweise ein Reformer oder ein Reformerwärmetauscher, welcher Brennstoff für die Umsetzung im Anodenabschnitt reformiert, Katalysatoren, beispielsweise in einer Abgasleitung, zum Umsetzten verbleibender Brennstoffanteile im Abgas oder weitere Wärmetauschervorrichtungen.

Der erste Wärmetauscher ist im Rezirkualtionsabschnitt angeordnet, wobei diesem jener Teil des heißen Abgases zugeführt wird, welcher nicht zum Nachbrenner geleitet wird. Es ist folglich eine warme Seite des ersten Wärmetauschers im Rezirkulationsabschnitt angeordnet, wobei eine kalte Seite des ersten Wärmetauschers insbesondere im Brennstoffzuführabschnitt angeordnet ist, sodass der erste Wärmetauscher insbesondere als Brennstoff/Brennstoff-Wärmetauscher ausgebildet ist.

Der Nachbrenner ist insbesondere als Oxidationskatalysator zum Umsetzten verbleibender Brennstoffanteile im Abgas ausgebildet. Stromabwärts des Nachbrenners ist eine Abgasleitung zur Abgabe des Abgases an die Umgebung vorgesehen. Günstigerweise kann stromabwärts des Nachbrenners ein dritter Wärmetauscher zum Abgeben von Wärme an den Luftzuführabschnitt vorgesehen sein.

Es kann auch günstig sei, den Nachbrenner in einen Wärmetauscher, z. B. in den dritten Wärmetauscher zu integrieren, wobei dieser dann bevorzugt als beschichteter Wärmetauscher ausgebildet ist. Dies ist besonders dann von Vorteil, wenn einerseits der Bauraum klein gehalten und andererseits der am Brennstoffzellenstapel anliegende Gegendruck gering gehalten werden soll. Durch eine Reduzierung der Anzahl an Komponenten im Brennstoffzellensystem wird sowohl der Bauraum als auch der Druckverlust reduziert.

Günstig ist es, wenn eine Kathodenabführleitung und eine Anodenabführleitung vorgesehen ist. Es sind also zwei getrennte Teilabschnitte stromabwärts des Brennstoffzellenstapels vorgesehen, wobei in der Kathodenabführleitung Kathodenabgas und in der Anodenabführleitung Anodenabgas führbar ist. Insbesondere sind beide Abführleitungen getrennt voneinander bis zum Nachbrenner geführt. Die Anodenabgasleitung führt insbesondere bis zur ersten Teilvorrichtung, über welche ein Teil des Anodenabgases in den Rezirkulationsabschnitt weiter zum ersten Wärmetauscher und ein anderer Teil im Abgasabschnitt weiter zum Nachbrenner geleitet wird. Grundsätzlich kann die Anodenabgasleitung zumindest teilweise als Teil des Rezirkulationsabschnittes angesehen werden, wobei diese insbesondere gleichzeitig zumindest teilweise als Teil des Abgasabschnittes angesehen werden kann.

Im Rahmen der Erfindung umfasst der Abgasabschnitt insbesondere zumindest teilweise die Kathodenabführleitung und die Anodenabführleitung, wobei im Abgasabschnitt sowohl das Kathodenabgas als auch das Anodenabgas bis zum Nachbrenner führbar sind (allerdings bevorzugt bis zum Nachbrenner getrennt voneinander). Stromabwärts des Nachbrenners geht der Abgasabschnitt insbesondere soweit weiter, bis das Abgas an die Umgebung abgegeben ist. Der Rezirkulationsabschnitt umfasst im Rahmen der Erfindung ebenso insbesondere zumindest teilweise die Anodenabführleitung. Die Anodenabführleitung trennt sich bevorzugt bei der ersten Teilvorrichtung zwischen Rezirkulationsabschnitt und Abgasabschnitt auf.

Vorteilhaft ist im Brennstoffzuführabschnitt ein Reformerwärmetauscher angeordnet , wobei dem Reformerwärmetauscher zumindest ein Teil des Kathodenabgases zuführbar ist. Eine warme Seite des Reformerwärmetauschers ist also in der Kathodenabführleitung angeordnet. Das heißt, der Reformer wird durch das heiße Kathodenabgas auf Betriebstemperatur gebracht. Stromabwärts des Reformerwärmetauschers wird das Kathodenabgas dann dem Nachbrenner zugeführt. Der Reformerwärmetauscher ist bevorzugt mit einer kalten Seite im Brennstoffzuführabschnitt stromaufwärts des Anodenabschnittes angeordnet. Dieser umfasst also eine kalte Seite stromaufwärts des Anodenabschnitts, die einen Reformer bildet, und eine warme Seite stromabwärts des Kathodenabschnitts, die einen Wärmetauscher bildet. Es hat sich herausgestellt, dass es unter Abwägung verschiedener Faktoren durchaus möglich ist und auch von Vorteil sein kann, das Kathodenabgas vollständig dem Wärmetauscher am Reformer bzw. der heißen Seite des Reformerwärmetauschers zuzuführen. Zunächst ist es von Vorteil, dass keine Strömungsteiler stromabwärts des Kathodenabschnitts nötig sind. Es kann also günstig sein, wenn das Kathodenabgas vom Kathodenabschnitt direkt und unverzweigt, also vollständig, zum Wärmetauscher am Reformer geleitet wird.

Das Kathodenabgas wird also insbesondere über den Reformer geführt und gibt dort Wärme and den insbesondere endothermen Dampfreformierungsprozess ab. Anschließend wird das Kathodenabgas in mit dem Anodenabgas gemischt und im Nachbrenner umgesetzt. Das Anodenabgas wird zuvor über den ersten Wärmetauscher geführt, um den Anodeneinlass auf die gewünschte Temperatur zu bringen.

Zweckmäßig ist es dabei, wenn stromabwärts des Reformerwärmetauschers eine zweite Teilvorrichtung zur Aufteilung der Kathodenabführleitung vorgesehen ist, um einen Teil des Kathodenabgases unmittelbar und einen Teil des Kathodenabgases mittelbar zum Nachbrenner zu leiten. Das heißt, es wird nicht das gesamte Kathodenabgas über den Reformerwärmetauscher zum Nachbrenner geleitet, sondern ein Teil davon wird auch direkt zum Nachbrenner geleitet. Hierbei ist weiter vorteilhaft eine zweite Verbindung stromaufwärts des Nachbrenners vorgesehen, bei welcher sich das vorher aufgeteilter Kathodenabgas wiedervereint und gemeinsam zum Nachbrenner geleitet wird. Dadurch ist die Temperatur im Nachbrenner noch besser regelbar, da sowohl dem Anodenabgas als auch dem Kathodenabgas über ein geeignetes Wärmetauschernetzwerk Wärme entzogen wird, bevor diese Gase in den Nachbrenner geleitet werden. Durch die Wärmeabgabe vom Kathodenabgas als auch Anodenabgas vor dem Mischungspunkt stromaufwärts des Nachbrenners wird die Temperatur im Mischungspunkt herabgesetzt. Darüber hinaus ist dadurch auch die Temperatur im und nach dem Nachbrenner reduziert, wodurch eine erhöhte thermische Degradation desselben verhindert ist. Diese Ausführung bringt weiter den Vorteil, dass die Temperatur am Reformer aktiv regelbar ist, indem der Massenstrom über den Reformer reduziert wird. Damit ist die Auslegung der Wärmeübertragung im Reformer nicht mehr so kritisch.

Von Vorteil ist es, wenn eine kalte Seite des ersten Wärmetauschers stromabwärts des Reformerwärmetauschers und eine warme Seite des ersten Wärmetauschers in der Anodenabführleitung angeordnet ist. Der reformierte Brennstoff ist also stromabwärts des Reformerwärmetauschers dem ersten Wärmetauscher zuführbar, über welchen dieser durch das heiße Anodenabgas auf eine vorbestimmte Temperatur zur Verwendung im Anodenabschnitt bringbar ist. Der erste Wärmetauscher ist folglich als Brennstoff/Brennstoff-Wärmetauscher ausgebildet.

Günstig ist es, wenn im Rezirkulationsabschnitt ein zweiter Wärmetauscher vorgesehen ist, wobei eine warme Seite des zweiten Wärmetauschers stromabwärts der ersten Teilvorrichtung angeordnet ist. Im zweiten Wärmetauscher ist das Anodenabgas im Rezirkulationsabschnitt weiter abkühlbar.

Vorteilhaft ist es weiter, wenn im Brennstoffzuführabschnitt oder im Rezirkulationsabschnitt ein Gebläse angeordnet ist, um eine Förderung bzw. Rezirkulieren des Anodengases sicherzustellen. Das Gebläse ist insbesondere als Rezirkulationsgebläse ausgebildet und beispielsweise stromabwärts der kalten Seite des zweiten Wärmetauschers angeordnet sein. Alternativ kann das Gebläse auch im Brennstoffzuführabschnitt, welcher mit dem Rezirkualtionsabschnitt verbunden ist, angeordnet sein. Die Anordnung des zweiten Wärmetauschers bringt den Vorteil mit sich, dass im Gebläse die thermische Belastung desselben und auch die Kompressionsarbeit reduziert werden können.

Zweckmäßig ist es, wenn der Brennstoffzuführabschnitt eine Brennstoffleitung umfasst, wobei die Brennstoffleitung stromaufwärts einer kalten Seite des zweiten Wärmetauschers mit dem Rezirkulationsabschnitt verbunden ist. Es wird also frischer Brennstoff über eine erste fluidische Verbindung zwischen dem Brennstoffzuführabschnitt und dem Rezirkulationsabschnitt in den Rezirkulationsabschnitt eingebracht. Dabei kann es günstig sein, wenn der frische Brennstoff in der Brennstoffleitung über das Gebläse angesaugbar ist, wenn der Versorgungsdruck zu gering ist. Dafür kann z. B. eine Regeleinheit in die Brennstoffleitung eingebaut sein, um hier unabhängig der Rezirkulationsrate auch die Brennstoffzufuhr regeln zu können. Sollte der Versorgungsdruck vom frischen Brennstoff hoch sein (z. B. über 300 mbar), kann der fische Brennstoff erst nach dem Gebläse dem Rezirkulationsabschnitt zugeführt werden. Der nun mit frischem Brennstoff angereicherte Brennstoffzuführabschnitt wird im zweiten Wärmetauscher vorgewärmt und in den Reformer eingebracht und reformiert (mit Wärmeeintrag aus dem Kathodenabgas wie oben beschrieben). Danach wird der Brennstoff im ersten Wärmetauscher (Wärme aus dem Anodenabgas, wie oben beschrieben) auf die geforderte Anodeneinlasstemperatur gebracht.

Günstigerweise ist ein Startbrenner vorgesehen. Durch den Startbrenner erfolgt ein Aufheizen des Brennstoffzellensystems. Der Startbrenner kann vorteilhaft beispielsweise als Flammenbrenner, als katalytischer Brenner oder als Hybridbrenner (katalytisch mit Flamme kombiniert) ausgeführt sein. Günstig kann es auch sein, wenn der Startbrenner in einen Oxidationskatalysator integriert oder kombiniert mit diesem ausgebildet ist. Die durch den Starbrenner freigesetzte Wärme kann mit Vorteil an verschiedenen Stellen in das System eingebracht werden, beispielsweise in eine Kathodenabgasleitung direkt stromabwärts des Kathodenabschnittes, in den Luftzuführabschnitt oder direkt in den Oxidationskatalysator oder stromabwärts oder stromaufwärts davon. Die Anordnung des Startbrenner ist abhängig von einzelnen Komponentenspezifikationen wie Temperaturlimits, Verträglichkeit von Verbrennungsabgas, und Ähnlichem. Im Aufheizprozess des Brennstoffzellensystems wird Wärme im Startbrenner generiert, wobei Leitung zum Zuführen von Brennstoff und Luft zum Startbrenner vorgesehen sind.

Eine Kathodeneinlasstemperatur am Brennstoffzellenstapel ist beispielsweise mit der oben beschriebenen Aufteilung de Kathodenabgases regelbar, da dadurch gleichzeitige eine Reformeraustrittstemperatur beeinflusst ist. Allerdings kann die Kathodeneinlasstemperatur auch über den Startbrenner geregelt werden, wobei dem Startbrenner Luft und/oder Brennstoff zugeführt werden.

Eine Verwendung eines erfindungsgemäßen Brennstoffzellensystems erfolgt mit Vorteil als stationäre Anlage oder in einem Kraftfahrzeug. Vorteilhaft kann das erfindungsgemäße Brennstoffzellensystem auch in marinen Anwendungen oder Flugzeugen verwendet werden.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben ist. Es zeigt schematisch:
Fig. 1 eine schematische Darstellung eines erfindungsgemäßen Brennstoffzellensystems;
Fig. 2 eine schematische Darstellung eines weiteren erfindungsgemäßen Brennstoffzellensystems;
Fig. 3 eine schematische Darstellung eines weiteren erfindungsgemäßen Brennstoffzellensystems.

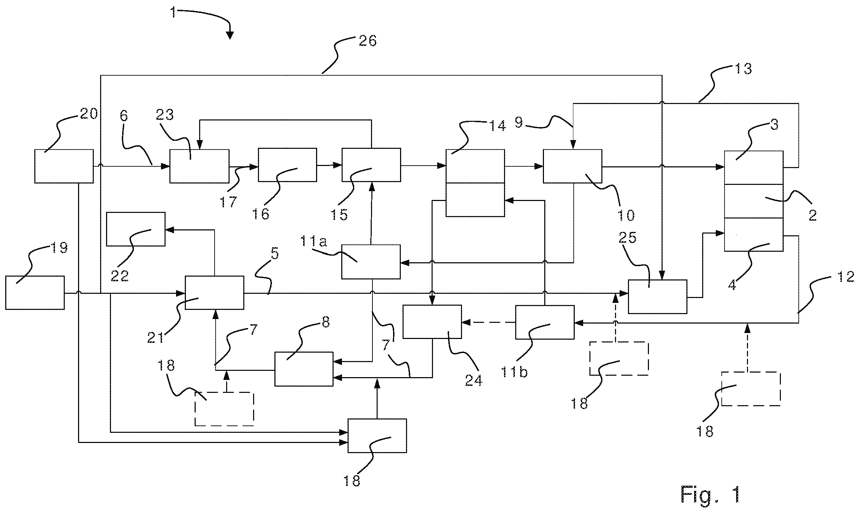

Fig. 1 zeigt ein erfindungsgemäßes Brennstoffzellensystem 1 mit einem Brennstoffzellenstapel 2 umfassend einen Anodenabschnitt 3 und einen Kathodenabschnitt 4. Es ist eine Luftquelle 19 vorgesehen, an welche ein Luftzuführabschnitt 5 anschließt, um Luft in Richtung des Kathodenabschnittes 4 zu fördern. Ebenso ist eine Brennstoffquelle 20 vorgesehen, an welche sich ein Brennstoffzuführabschnitt 6 mit einer Brennstoffleitung 17 anschließt, um Brennstoff in Richtung des Anodenabschnittes 3 zu fördern. Das Brennstoffzellensystem 1 umfasst weiter einen Rezirkulationsabschnitt 9, über welches Abgas aus dem Anodenabschnitt 3 durch ein Gebläse 16 wieder in Richtung des Anodenabschnittes 3 gefördert wird. Es ist ein Abgasabschnitt 7 mit einem Nachbrenner 8 vorgesehen. Der Nachbrenner ist als Oxidationskatalysator ausgebildet, wobei in diesen zumindest mittelbar sowohl eine Kathodenabführleitung 12 als auch eine Anodenabführleitung 13 führen. Es wird also Anodenabgas unter Zufuhr von Kathodenabgas verbrannt. Das verbrannte Abgas wird dann über einen dritten Wärmetauscher 21 an die Umgebung 22 abgeführt.

Die Anodenabführleitung 13 und die Kathodenabführleitung 12 sind als zwei getrennte Leitungen ausgebildet. Beim Brennstoffzellensystem 1 gemäß Fig. 1 werden diese Leitungen des Abgasabschnittes 7 bis zum Nachbrenner getrennt geführt.

Die Anodenabführleitung 13 ist stromabwärts des Anodenabschnittes 3 im Rezirkulationsabschnitt 9 geführt und führt in einen stromabwärts des Anodenabschnittes 9 angeordneten ersten Wärmetauscher 10, über welchen das warme Anodenabgas Wärme an den Brennstoff der Brennstoffleitung 17 abgibt. Der erste Wärmetauscher 10 ist also als Brennstoff/Brennstoff-Wärmetauscher ausgebildet. Stromabwärts einer warmen Seite des erstem Wärmetauschers 10 ist eine erste Teilvorrichtung 11a angeordnet, über welche das Anodenabgas derart aufteilbar ist, dass ein Teil davon weiter im Rezirkulationsabschnitt 9 und ein anderer Teil davon in Richtung des Nachbrenners 8 geführt wird. Zum Nachbrenner 8 führt weiter der Abgasabschnitt 7.

Das weiter im Rezirkulationsabschnitt 9 geführte Abgas passiert einen zweiten Wärmetauscher 15, welcher mit einer kalten Seite im Brennstoffzuführabschnitt angeordnet ist, und wird stromabwärts vom zweiten Wärmetauscher über eine erste Verbindung 23 dem Brennstoffzuführabschnitt 6 zugeführt.

Das Gebläse 16, welches als Rezirkulationsgebläse ausgebildet ist, ist gemäß Fig. 1 im Brennstoffzuführabschnitt 6 zwischen der ersten Verbindung 23 und der kalten Seiten des zweiten Wärmetauschers 15 angeordnet. Bei dieser Anordnung des Gebläses 16, ist es möglich, die thermische Belastung des Gebläses 16 und auch die Kompressionsarbeit zu reduzieren. Darüber hinaus kann bei entsprechender Auslegung der frische Brennstoff über das Gebläse 16 angesaugt werden, wenn der Versorgungsdruck zu gering ist. Dafür kann weiter z. B. eine Regeleinheit in den Brennstoffzuführabschnitt 6 eingebaut werden (nicht dargestellt), um unabhängig einer Rezirkulationsrate auch die Brennstoffzufuhr regeln zu können.

Stromaufwärts des Gebläses 16 ist eine erste fluidische Verbindung 23 zwischen dem Rezirkulationsabschnitt 9 und dem Brennstoffzuführabschnitt 6 vorgesehen, sodass der Rezirkulationsabschnitt 9 und der Brennstoffzuführabschnitt 6 zusammengeführt sind. Der frische Brennstoff wird nun zusammen mit dem rezirkulierten Abgas in Richtung des Anodenabschnittes 3 gefördert. Dabei wird dieser Brennstoff nun in einem ersten Schritt durch die kalte Seite des zweiten Wärmetauschers 15 geführt, wodurch dieser wieder erwärmt wird.

Stromaufwärts des Anodenabschnittes 3 und stromabwärts der kalten Seite des zweiten Wärmetauschers 15 ist der Reformerwärmetauscher 14 angeordnet, welcher den Brennstoff zur Verwendung im Anodenabschnitt 3 aufbereitet. Dem Reformerwärmetauscher 14 wird zum Aufwärmen des entsprechenden Reformerabschnittes Kathodenabgas über die Kathodenabführleitung 12 zugeführt. Gemäß Fig. 1 ist der warmen Seite des Reformerwärmetauscher 14 in einer ersten Ausführung (durchgezogene Linie) das gesamte Kathodenabgaszuführbar, welcher stromabwärts des Reformerwärmetauschers 14 dem Nachbrenner 8 zugeführt wird. In einer zweiten Ausführung (gestrichelte Linie) ist eine zweite Teilvorrichtung 11b zur Aufteilung der Kathodenabführleitung 12 vorgesehen ist, um einen Teil des Kathodenabgases zum Nachbrenner 8 zu leiten. Es wird also nicht das gesamte Kathodenabgas über den Reformerwärmetauscher 14 zum Nachbrenner 8 geführt, sondern ein Teil davon wird direkt zum Nachbrenner 8 geführt. Bei dieser Ausführung ist eine zweite Verbindung 24 vorgesehen, um die beiden Teilströme des Kathodenabgases stromaufwärts des Nachbrenners 8 wieder zusammenzuführen.

Im Luftzuführabschnitt 5 wird Luft von der Luftquelle 19 in Richtung des Kathodenabschnittes 4 geführt, wobei diese stromaufwärts der Luftquelle 19 durch die kalte Seite des dritten Wärmetauschers 21 geführt und dadurch erwärmt wird. Stromabwärts des dritten Wärmetauschers 21 und des Kathodenabschnittes 4 ist eine dritte Verbindung 25 vorgesehen, bei welcher die erwärmte Luft mit frischer Luft, welche über eine zusätzliche Luftleitung 26 eingebracht wird, gegebenenfalls vermischbar ist, um eine Einlasstemperatur des Kathodenabschnittes insbesondere auch ohne Verzögerung zu regeln.

Das Brennstoffzellensystem 1 gemäß Fig. 1 umfasst weiter einen Startbrenner 18, welchem sowohl Brennstoff aus der Brennstoffquelle 20 als auch Luft aus der Luftquelle 19 zugeführt werden. Der Startbrenner 18 ist zum Aufheizen des Brennstoffzellensystems 1 angeordnet und ausgebildet. Hierfür wird die Wärme beispielsweise stromaufwärts des Nachbrenners 8 (durchgezogenen Linie) oder stromabwärts des Nachbrenners (strichlierte Linie) oder des Luftzuführabschnittes 5 (strichlierte Linie) oder der Kathodenabluftleitung 12 (strichlierte Linien) zugeführt. Weiter kann im Betrieb über die Zufuhr von Luft und/oder Brennstoff die Temperatur der kalten Auslassseite des dritten Wärmetauschers 21 erniedrigt oder erhöht und damit geregelt werden. Darüber hinaus ist es durch die Zufuhr von Luft und/oder Brennstoff möglich, eine Temperatur im Nachbrenner 8 derart zur regeln, dass dieser vor einer Überhitzung geschützt ist.

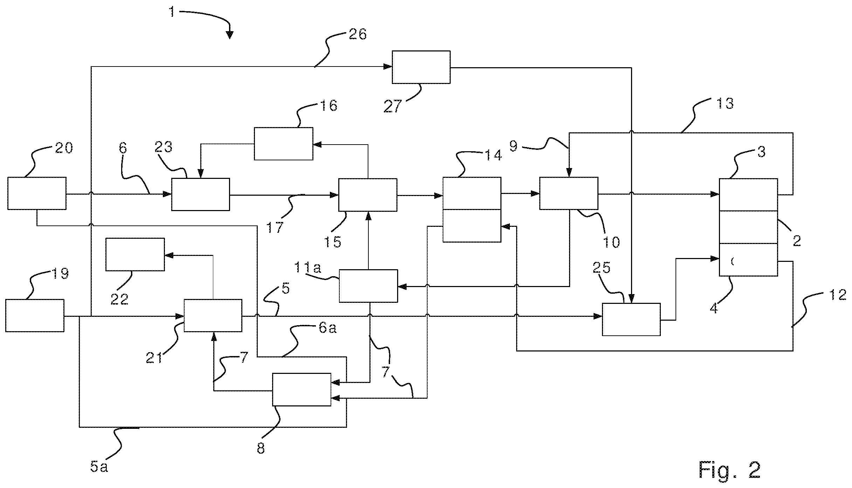

Fig. 2 zeigt ein weiteres erfindungsgemäßes Brennstoffzellensystem 1. Elemente, welche die gleiche Funktion und insbesondere gleiche Anordnung wie jene gemäß Fig. 1 haben, haben auch die gleichen Bezugszeichen und werden nicht weiter beschrieben. Im Unterschied zur Fig. 1 ist beim Brennstoffzellensystem 1 gemäß Fig . 2 das Gebläse 16 stromabwärts der warmen Seite des zweiten Wärmetauscher 15 und stromaufwärts der ersten Verbindung 23 angeordnet. Diese Ausführung ist vorteilhaft, wenn ein Versorgungsdruck vom frischen Brennstoff hoch sein sollte (z. B. mehr als 300 mbar). Der fische Brennstoff wird dann erst nach dem Gebläse 16 über die erste Verbindung 23 mit dem Rezirkulationsabschnitt 9 verbunden.

Darüber hinaus sind beim Brennstoffzellensystem 1 gemäß Fig. 2 eine separate Luftleitung 5a und eine separate Brennstoffleitung 6a vorgesehen, über welche Luft und Brennstoff zum Nachbrenner 8 bringbar sind. Dadurch ist eine Temperatur und Zündfähigkeit im Nachbrenner noch besser regelbar. Weiter kann im Betrieb über die Zufuhr von Luft und/oder Brennstoff die Temperatur der kalten Auslassseite des dritten Wärmetauschers 21 erniedrigt oder erhöht und damit geregelt werden.

Es ist wieder die dritte Verbindung 25 vorgesehen, bei welcher die erwärmte Luft mit frischer Luft, welche über die zusätzliche Luftleitung 26 eingebracht wird, gegebenenfalls vermischbar ist. Bei dieser Ausführung des Brennstoffzellensystems 1 ist weiter auch ein Heizer 27, insbesondere ein elektrischer Heizer 27, vorgehen, wodurch die zusätzlichen Luftleitung 26 auch für einen Aufheizvorgang benutzbar ist.

Zur Vereinfachung sind in Fig. 2 der Startbrenner 18 nicht dargestellt. Beim Brennstoffzellensystem 1 gemäß Fig. 2 ist die zweite Verbindung 24 nicht dargestellt. Allerdings kann auch dieses Brennstoffzellensystem 1 die Ausführung mit der zweiten Verbindung 24 gemäß Fig. 1 aufweisen.

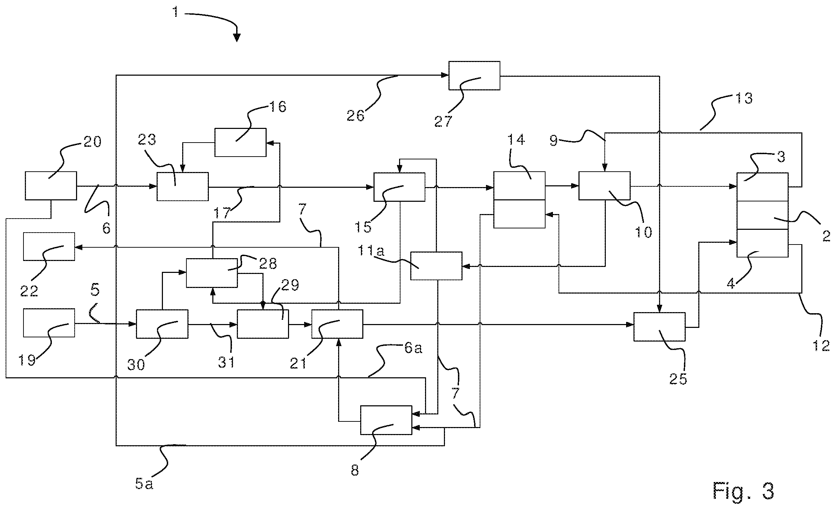

In Fig. 3 ist ein weiteres erfindungsgemäßes Brennstoffzellensystem 1 gezeigt. Auch hier haben Elemente, welche die gleiche Funktion und insbesondere gleiche Anordnung wie jene gemäß Fig. 1 oder 2 haben, haben auch die gleichen Bezugszeichen und werden nicht weiter beschrieben. Im Unterschied zu den Brennstoffzellensystemen 1 gemäß Fig. 1 und 2 ist hier im Luftzuführabschnitt 5 ein Wärmetauschernetzwerk mit einem vierten Wärmetauscher 28, einer vierten Verbindung 29 und einer dritten Teilvorrichtung 30 vorgesehen.

Der Luftzuführabschnitt 5 weist eine Bypassleitung 31 auf, über welche der vierte Wärmetauscher 28 umgangen werden kann. Hierfür ist stromaufwärts des vierten Wärmetauchers 28 die dritte Teilvorrichtung 30 vorgesehen, von welcher die Bypassleitung 31 abzweigt, und stromaufwärts des dritten Wärmetauschers 21 die Verbindung 29, bei welcher die Bypassleitung 31 sich wieder verbindet, vorgesehen.

Stromaufwärts der Verbindung 29 ist der vierte Wärmetauscher 28 vorgesehen, wobei dessen kalte Seite im Luftzuführabschnitt 5 und dessen warme Seite im Rezirkulationsabschnitt 9 stromaufwärts des Gebläses 16 angeordnet ist, sodass eine Einlasstemperatur des Gebläses effizient regelbar ist. Der vierte Wärmetauscher 28 ist also als Brennstoff/Luft-Wärmetauscher ausgebildet und angeordnet.

Zur Vereinfachung sind in Fig. 3 der Startbrenner 18 nicht dargestellt. Beim Brennstoffzellensystem 1 gemäß Fig. 3 ist die zweite Verbindung 24 nicht dargestellt. Allerdings kann auch dieses Brennstoffzellensystem 1 die Ausführung mit der zweiten Verbindung 24 gemäß Fig. 1 aufweisen.

## Patentansprüche

1. Brennstoffzellensystem (1), insbesondere SOFC-System, umfassend zumindest einen Brennstoffzellenstapel (2) mit einem Anodenabschnitt (3) und einem Kathodenabschnitt (4), einen Luftzuführabschnitt (5), einen Brennstoffzuführabschnitt (6), einen Abgasabschnitt (7) mit einem Nachbrenner (8) und einen Rezirkulationsabschnitt (9) zur Rezirkulation von Anodenabgas als Rezirkulationsgas aus dem Anodenabschnitt (3), **dadurch gekennzeichnet, dass** im Rezirkulationsabschnitt (9) ein erster Wärmetauscher (10) angeordnet ist, wobei stromabwärts des ersten Wärmetauschers (10) zur Aufteilung des Anodenabgases in den Rezirkulationsabschnitt (9) und in den Abgasabschnitt (7) eine erste Teilvorrichtung (11a) vorgesehen ist, um einen Teil des Anodenabgases zum ersten Wärmetauscher (10) und einen anderen Teil des Anodenabgases zum Nachbrenner (8) zu leiten, wobei eine warme Seite des ersten Wärmetauschers im Rezirkulationsabschnitt und eine kalte Seite des ersten Wärmetauschers im Brennstoffzuführabschnitt angeordnet ist.

2. Brennstoffzellensystem (1) nach Anspruch 1, **dadurch gekennzeichnet, dass** eine Kathodenabführleitung (12) und eine Anodenabführleitung (13) vorgesehen ist.

3. Brennstoffzellensystem (1) nach Anspruch 1 oder 2, **dadurch gekennzeichnet, dass** im Brennstoffzuführabschnitt (6) ein Reformerwärmetauscher (14) angeordnet ist, wobei dem Reformerwärmetauscher (14) zumindest ein Teil des Kathodenabgases zuführbar ist.

4. Brennstoffzellensystem (1) nach Anspruch 2 oder 3, **dadurch gekennzeichnet, dass** stromabwärts des Kathodenabschnittes (4) eine zweite Teilvorrichtung (11b) zur Aufteilung der Kathodenabführleitung (12) vorgesehen ist, um einen Teil des Kathodenabgases unmittelbar und einen Teil des Kathodenabgases mittelbar zum Nachbrenner (8) zu leiten.

5. Brennstoffzellensystem (1) nach einem der Ansprüche 2 bis 4, **dadurch gekennzeichnet, dass** eine kalte Seite des ersten Wärmetauschers (10) stromabwärts des Reformerwärmetauschers (14) und eine warme Seite des ersten Wärmetauschers (10) in der Anodenabführleitung (13) angeordnet ist.

6. Brennstoffzellensystem (1) nach einem der Ansprüche 1 bis 5, **dadurch gekennzeichnet, dass** im Rezirkulationsabschnitt (9) ein zweiter Wärmetauscher (15) vorgesehen ist, wobei eine warme Seite des zweiten Wärmetauschers (15) stromabwärts der ersten Teilvorrichtung (11a) angeordnet ist.

7. Brennstoffzellensystem (1) nach einem der Ansprüche 1 bis 6 **dadurch gekennzeichnet, dass** im Brennstoffzuführabschnitt (6) oder im Rezirkulationsabschnitt (9) ein Gebläse (16) angeordnet ist.

8. Brennstoffzellensystem (1) nach einem der Ansprüche 1 bis 7, **dadurch gekennzeichnet, dass** der Brennstoffzuführabschnitt (6) eine Brennstoffleitung (17) umfasst, wobei die Brennstoffleitung (17) stromaufwärts einer kalten Seite des zweiten Wärmetauschers (15) mit dem Rezirkulationsabschnitt (9) verbunden ist.

9. Brennstoffzellensystem (1) nach einem der Ansprüche 1 bis 8, **dadurch gekennzeichnet, dass** ein Startbrenner (18) vorgesehen ist.

10. Verwendung eines Brennstoffzellensystems (1) nach einem der Ansprüche 1 bis 9 als stationäre Anlage oder in einem Kraftfahrzeug.

## Claims

1. Fuel cell system (1), in particular SOFC system, comprising at least a fuel cell stack (2) with an anode section (3) and a cathode section (4), an air supply section (5), a fuel supply section (6), an exhaust gas section (7) with an afterburner (8) and a recirculation section (9) for recirculating anode exhaust gas as recirculation gas from the anode section (3), **characterized in that** a first heat exchanger (10) is arranged in the recirculation section (9), wherein downstream of the first heat exchanger (10) a first sub-device (11a) is provided for dividing the anode exhaust gas into the recirculation section (9) and the exhaust gas section (7) in order to direct a part of the anode exhaust gas to the first heat exchanger (10) and another part of the anode exhaust gas to the afterburner (8), wherein a warm side of the first heat exchanger is located in the recirculation section, and a cold side of the first heat exchanger is located in the fuel supply section.

2. Fuel cell system (1) according to claim 1, **characterized in that** a cathode discharge line (12) and an anode discharge line (13) are provided.

3. Fuel cell system (1) according to claim 1 or 2, **characterized in that** a reformer heat exchanger (14) is arranged in the fuel supply section (6), wherein at least a portion of the cathode exhaust gas can be supplied to the reformer heat exchanger (14).

4. Fuel cell system (1) according to claim 2 or 3, **characterized in that** a second sub-device (11b) for dividing the cathode discharge line (12) is provided downstream of the cathode section (4) in order to direct part of the cathode exhaust gas directly and part of the cathode exhaust gas indirectly to the afterburner (8).

5. Fuel cell system (1) according to any one of claims 2 to 4, **characterized in that** a cold side of the first heat exchanger (10) is arranged downstream of the reformer heat exchanger (14) and a hot side of the first heat exchanger (10) is arranged in the anode discharge line (13).

6. Fuel cell system (1) according to any one of claims 1 to 5, **characterized in that** a second heat exchanger (15) is provided in the recirculation section (9), wherein a warm side of the second heat exchanger (15) is arranged downstream of the first sub-device (11a).

7. Fuel cell system (1) according to any one of claims 1 to 6, **characterized in that** a blower (16) is arranged in the fuel supply section (6) or in the recirculation section (9).

8. Fuel cell system (1) according to any one of claims 1 to 7, **characterized in that** the fuel supply section (6) comprises a fuel line (17), wherein the fuel line (17) is connected to the recirculation section (9) upstream of a cold side of the second heat exchanger (15).

9. Fuel cell system (1) according to any one of claims 1 to 8, **characterized in that** a start burner (18) is provided.

10. Use of a fuel cell system (1) according to any one of claims 1 to 9 as a stationary system or in a motor vehicle.

## Revendications

1. Système de pile à combustible (1), notamment système SOFC, comprenant au moins un empilement de piles à combustible (2) doté d'une section anodique (3) et d'une section cathodique (4), d'une section d'alimentation en air (5), d'une section d'alimentation en combustible (6), d'une section d'échappement des gaz (7) avec une chambre de postcombustion (8) et d'une section de recirculation (9) permettant de recycler les gaz d'échappement de l'anode provenant de la section anodique (3), **caractérisé par** la présence d'un premier échangeur de chaleur (10) dans la section de recirculation (9), en aval de ce premier échangeur de chaleur (10), un premier sous-dispositif (11a) est prévu pour diviser les gaz d'échappement de l'anode entre la section de recirculation (9) et la section d'échappement (7), afin de diriger une partie de ces gaz vers le premier échangeur de chaleur (10) et l'autre partie vers la chambre de postcombustion (8), ou la face chaude du premier échangeur de chaleur est située dans la section de recirculation, et sa face froide dans la section d'alimentation en combustible.

2. Système de pile à combustible (1) selon la revendication 1, **caractérisé en ce qu'**il comporte une ligne d'évacuation cathodique (12) et une ligne d'évacuation anodique (13).

3. Système de pile à combustible (1) selon la revendication 1 ou 2, **caractérisé en ce qu'**un échangeur de chaleur à reformage (14) est disposé dans la section d'alimentation en combustible (6), et qu'au moins une partie des gaz d'échappement cathodiques peut être acheminée vers cet échangeur de chaleur (14).

4. Système de pile à combustible (1) selon la revendication 2 ou 3, **caractérisé en ce qu'**un second sous-dispositif (11b) de division de la ligne de décharge cathodique (12) est prévu en aval de la section cathodique (4) afin de diriger une partie des gaz d'échappement cathodiques directement et une autre partie indirectement vers la chambre de postcombustion (8).

5. Système de pile à combustible (1) selon l'une quelconque des revendications 2 à 4, **caractérisé en ce que** le côté froid du premier échangeur de chaleur (10) est disposé en aval de l'échangeur de chaleur du reformeur (14) et que le côté chaud du premier échangeur de chaleur (10) est disposé dans la ligne de décharge anodique (13).

6. Système de pile à combustible (1) selon l'une quelconque des revendications 1 à 5, **caractérisé en ce qu'**un deuxième échangeur de chaleur (15) est prévu dans la section de recirculation (9), une face chaude du deuxième échangeur de chaleur (15) étant disposée en aval du premier sous-dispositif (11a).

7. Système de pile à combustible (1) selon l'une quelconque des revendications 1 à 6, **caractérisé en ce qu'**un ventilateur (16) est disposé dans la section d'alimentation en combustible (6) ou dans la section de recirculation (9).

8. Système de pile à combustible (1) selon l'une quelconque des revendications 1 à 7, **caractérisé en ce que** la section d'alimentation en combustible (6) comprend une conduite de combustible (17), cette conduite (17) étant raccordée à la section de recirculation (9) en amont de la face froide du second échangeur de chaleur (15).

9. Système de pile à combustible (1) selon l'une quelconque des revendications 1 à 8, **caractérisé en ce qu'**un brûleur d'allumage (18) est prévu.

10. Utilisation d'un système de pile à combustible (1) selon l'une quelconque des revendications 1 à 9 comme système stationnaire ou dans un véhicule à moteur.
